# EUROPÄISCHE PATENTSCHRIFT

(11) **EP 2 524 581 B1**
(45) Veröffentlichungstag und Bekanntmachung des Hinweises auf die Patenterteilung: **07.01.2015**
(21) Anmeldenummer: 11751592.4
(22) Anmeldetag: 30.08.2011
(51) Int. Cl.: H05B 41/288, H05B 41/292

(54) **SCHALTUNGSANORDNUNG UND VERFAHREN ZUM STARTEN UND BETREIBEN EINER HOCHDRUCKENTLADUNGSLAMPE**
CIRCUIT ARRANGEMENT AND METHOD FOR STARTING AND OPERATING A HIGH-PRESSURE DISCHARGE LAMP
MONTAGE ET PROCÉDÉ PERMETTANT DE METTRE EN MARCHE ET DE FAIRE FONCTIONNER UNE LAMPE À DÉCHARGE HAUTE PRESSION

(30) Priorität: 09.09.2010 DE 102010040449
(43) Veröffentlichungstag der Anmeldung: 21.11.2012
(73) Patentinhaber: OSRAM GmbH, 80807 München (DE)
(72) Erfinder: MUEHLSCHLEGEL, Joachim, 82194 Gröbenzell (DE)
(86) Internationale Anmeldenummer: PCT/EP2011/064855
(87) Internationale Veröffentlichungsnummer: WO 2012/031935

(56) Entgegenhaltungen:
- EP-A1- 1 054 580
- EP-A1- 2 104 403
- WO-A2-02/32194

## Beschreibung

### Technisches Gebiet

Die Erfindung betrifft eine Schaltungsanordnung und ein Verfahren zum Starten und Betreiben einer Hochdruckentladungslampe mit einer Gleichrichterschaltung, die eine Zwischenkreisspannung ausgibt, einem Halbbrückenwandler zum Erzeugen einer Wechselspannung und einem Überlagerungszündgerät zum Erzeugen einer Zündspannung zum Starten der Hochdruckentladungslampe.

### Hintergrund

Die Erfindung geht aus von einer Schaltungsanordnung und einem Verfahren zum Starten und Betreiben einer Hochdruckentladungslampe nach der Gattung der unabhängigen Ansprüche.

Die Erfindung betrifft insbesondere Betriebsgerät für Hochdruckentladungslampen, die auf einer Halbbrückenschaltung mit Koppelkondensatoren aufgebaut sind. Bekannte Betriebsgeräte mit Halbbrückenschaltung werden z.B. mit Netzspannung betrieben, und weisen eine Gleichrichterschaltung auf, die eine oft geregelte Gleichspannung bereitstellt. Diese Spannung wird auch oft als Zwischenkreisspannung bezeichnet.

Prinzipbedingt ist bei Betriebsgeräten mit Halbbrücke die maximale an die Hochdruckentladungslampe anlegbare Spannung die halbe Zwischenkreisspannung, also maximal etwa 250V, da die halbe Spannung an den Koppelkondensatoren abfällt. Diese maximale an die Hochdruckentladungslampe anlegbare Spannung ist insbesondere wichtig beim Starten der Hochdruckentladungslampe, im Folgenden auch als Lampe bezeichnet, wenn diese kurz nach dem Zünden, also kurz nach der Etablierung eines elektrischen Durchbruchs zwischen den Lampenelektroden ,hochgefahren' wird. Dies ist bei Hochdruckentladungslampen immer ein neuralgischer Betriebspunkt, da die Elektroden des Gasentladungslampenbrenners dabei noch kalt sind.

Der Bogenansatz ist beim Betrieb einer Gasentladungslampe mit Wechselstrom grundsätzlich problematisch. Beim Betrieb mit Wechselstrom wird während einer Kommutierung der Betriebsspannung eine Kathode zur Anode und umgekehrt eine Anode zur Kathode. Der Übergang Kathode-Anode ist prinzipbedingt unproblematisch, da die Temperatur der Elektrode keinen Einfluss auf ihren anodischen Betrieb hat. Beim Übergang Anode-Kathode hängt die Fähigkeit der Elektrode, einen ausreichend hohen Strom liefern zu können, von deren Temperatur ab. Ist diese zu niedrig, wechselt der Lichtbogen während der Kommutierung, meistens nach dem Nulldurchgang, von einer punktförmigen Bogenansatzbetriebsweise in eine diffuse Bogenansatzbetriebsweise. Dieser Wechsel geht mit einem oft sichtbaren Einbruch der Lichtemission einher, was als Flackern wahrgenommen werden kann. Im ungünstigsten Fall geht die Lampe ganz aus.

Sinnvollerweise wird die Lampe also in punktförmiger Bogenansatzbetriebsweise betrieben, da der Bogenansatz hier sehr klein und damit sehr heiß ist. Das hat zur Folge, dass hier aufgrund der höheren Temperatur am kleinen Ansatzpunkt weniger Spannung benötigt wird, um ausreichend Strom liefern zu können.

Als Kommutierung wird im folgenden der Vorgang betrachtet, bei dem die Polarität der Spannung wechselt, und bei dem daher eine starke Strom- oder Spannungsänderung auftritt. Bei einer im wesentlichen symmetrischen Betriebsweise der Lampe befindet sich bei der Mitte der Kommutierungszeit der Spannungs- oder Stromnulldurchgang. Hierbei ist zu bemerken, dass die Spannungskommutierung üblicherweise immer schneller abläuft als die Stromkommutierung.

Aus ,The boundary layers of Ac-arcs at HID-electrodes: phase resolved electrical measurements and optical observations', O. Langenscheidt et al., J. Phys D 40 (2007), S. 415-431 ist bekannt, dass bei einer kalten Elektrode und diffusem Bogenansatz die Spannung nach der Kommutierung zunächst ansteigt, da die zu kalte Elektrode den benötigten Strom nur durch eine höhere Spannung liefern kann. Kann die Vorrichtung zum Betrieb der Gasentladungslampe diese Spannung nicht liefern, so tritt das o.g. Flackern auf.

Beim Lampenstart tritt diese Problematik besonders stark hervor, da die Elektroden hier nur Umgebungstemperatur haben und noch nicht ihre Betriebstemperatur von über 2000°C. Hier ist die Wahrscheinlichkeit groß dass die Lampe nach dem Zünden sofort-wieder verlischt wenn die Spannung, die an die Lampe angelegt wird, zu klein ist. Diese Spannung wird üblicherweise als Übernahmespannung bezeichnet, da sie die Übernahme der Hochdruckentladungslampe von einer Glimmentladung kurz nach dem Zünden zu einer Bogenentladung einleitet. Bei manchen Typen von Hochdruckentladungslampen sind die maximalen 250V Übernahmespannung, die ein auf einer Halbbrücke aufgebautes Betriebsgerät liefern kann zu wenig, um ein sicheres Starten der Hochdruckentladungslampe zu gewährleisten.

Ein weiteres Problem von Halbbrückenbetriebsgeräten besteht darin, dass sie aufgrund der seriell zur Hochdruckentladungslampe geschalteten Kondensatoren keine Gleichstromphasen an die Hochdruckentladungslampe anlegen können. Diese gehören bei Betriebsgeräten mit einer Vollbrücke schon länger zum Stand der Technik, da sie ein schnelles und exaktes Aufheizen der Lampenelektroden gewährleisten.

Zur Lösung des ersten Problems ist es aus dem Stand der Technik bekannt, einen Schalter Parallel zu einem der Koppelkondensatoren zu schalten, um diesen zu entladen und die Übernahmespannung zu erhöhen. Eine solche Schaltungsanordnung ist aus der WO2002/32194 bekannt. Hier wird vor dem Starten der Hochdruckentladungslampe ein Schalter mit einem seriell geschalteten Widerstand parallel zu einem der Koppelkondensatoren geschaltet, und dieser bei Schließen des Schalters komplett entladen.

Für das weitere Problem ist aus dem Stand der Technik keine Lösung bekannt.

Bekannte Betriebsgeräte verwenden zum Zünden der Hochdruckentladungslampe üblicherweise ein sogenanntes Überlagerungszündgerät, welches seriell zu Lampe geschaltet ist und die für einen Durchbruch im Gasentladungslampenbrenner erforderliche Zündspannung generiert. Diese Überlagerungszündgeräte bestehen üblicherweise aus einem Zündtransformator, an dessen Sekundärseite die Zündspannung generiert wird, und an dessen Primärseite ein sogenannter Zündkreis bestehend aus einem Zündkondensator und einem Schalter angeschlossen ist. Die Serienschaltung aus Zündkondensator und Schalter ist zur Primärwicklung des Zündtransformators parallel geschaltet. Die Sekundärseite des Zündtransformators ist seriell zur Hochdruckentladungslampe geschaltet. Der Schalter dieser Überlagerungszündgeräte ist oftmals eine Funkenstrecke. Diese weist aber das Problem einer hohen Toleranz der Durchbruchsspannung und damit einer nicht immer optimalen Zündung der Hochdruckentladungslampe auf. Bei fortgeschrittenen Zündgeräten ist der Schalter daher als fremd gesteuerter Schalter ausgeführt, der aus einem Transistor mit zugehöriger Ansteuerung besteht. Diese Variante weist aber das Problem einer aufwendigen Ausführung und damit signifikanten Verteuerung des Betriebsgerätes auf.

### Aufgabe

Es ist Aufgabe der Erfindung, eine Schaltungsanordnung und ein Verfahren zum Starten und Betreiben einer Hochdruckentladungslampe anzugeben, welche die oben genannten Nachteile nicht mehr aufweisen.

### Zusammenfassung

Die Lösung der Aufgabe bezüglich der Schaltungsanordnung erfolgt erfindungsgemäß mit einer Schaltungsanordnung zum Starten und Betreiben einer Hochdruckentladungslampe, aufweisend eine Halbbrückenanordnung mit einem Halbbrückenmittelpunkt, die an eine Zwischenkreisspannung mit einem Bezugspotenzial und einem Speisespannungspotenzial angeschlossen ist, eine Lampendrossel, die mit einem Ende an den Halbbrückenmittelpunkt angeschlossen ist, eine Zündstufe, die mit dem anderen Ende der Lampendrossel sowie mit der Zwischenkreisspannung verbunden ist, einen ersten Schalter, der zwischen das Bezugspotential der Zwischenkreisspannung und die Zündstufe geschaltet ist, eine Serienschaltung eines ersten und eines zweiten Kondensators, die an die Zwischenkreisspannung angeschlossen ist, Anschlüsse zum Anschließen einer Hochdruckentladungslampe, wobei ein erster Anschluss mit der Zündstufe verbunden ist und ein zweiter Anschluss mit dem Verbindungspunkt des ersten und zweiten Kondensators, ein Zweipol-Netzwerk, dessen erster Pol mit der Zündstufe verbunden ist und dessen zweiter Pol mit dem Verbindungspunkt des ersten und zweiten Kondensators verbunden ist, wobei der erste Schalter zur Erzeugung von Zündpulsen zum Zünden einer an die Schaltungsanordnung angeschlossenen Hochdruckentladungslampe und zum Entladen des zweiten Kondensators über das Zweipolnetzwerk dient. Damit wird ein zuverlässiger und schonender Start der Hochdruckentladungslampe sichergestellt, indem die Übernahmespannung erhöht wird und ein Heizen der Elektroden des Gasentladungslampenbrenners nach der Zündung stattfindet.

Zum Erhöhen der Übernahmespannung wird vorzugsweise der zweite Kondensator bis auf eine vorbestimmte Spannung entladen. Die vorbestimmte Spannung liegt dabei bevorzugt zwischen 10V und 200V, insbesondere zwischen 20V und 150V.

Zum Entladen des zweiten Kondensators wird dabei bevorzugt der erste Schalter für eine vorbestimmte Zeit getaktet angesteuert. Besonders bevorzugt wird der erste Schalter mit einer Pulsweitenmodulation angesteuert.

Die Lösung der Aufgabe bezüglich des Verfahrens erfolgt erfindungsgemäß mit einem Verfahren zum Starten und Betreiben einer Hochdruckentladungslampe mit einer oben beschriebenen Schaltungsanordnung und folgenden Schritten:
- Erzeugen einer Zündspannung und Entladen des zweiten Kondensators auf eine vorbestimmte erste Spannung durch getaktetes Ansteuern des ersten Schalters mit einer ersten Frequenz und einem ersten Tastverhältnis für eine erste Zeitspanne,
- Aufladen des zweiten Kondensators auf eine vorbestimmte zweite Spannung und erzeugen einer Zündspannung durch getaktetes Ansteuern des ersten Schalters mit einer zweiten Frequenz und einem zweiten Tastverhältnis für eine zweite Zeitspanne,
- permanentes Öffnen des ersten Schalters und erzeugen einer rechteckförmigen Wechselspannung zum Betreiben der Hochdruckentladungslampe.

Bevorzugt ist die Länge der ersten Zeitspanne abhängig von der Detektion eines elektrischen Durchbruchs in der Hochdruckentladungslampe. Vorzugsweise dauert die erste Zeitspanne ab der Detektion des elektrischen Durchbruchs noch eine vorbestimmte Zeit lang an. Damit ist eine Gleichspannungsphase gewährleistet, die eine der Elektroden des Gasentladungslampenbrenners möglichst schnell auf Betriebstemperatur bringt. Die Länge der Gleichspannungsphase beträgt dabei 0,1s bis 1s, bevorzugt 0,2s bis 0,6s. Die optimale Länge der Gleichspannungsphase hängt dabei vom Lampentyp, und der Wattage der Hochdruckentladungslampe ab.

Besonders bevorzugt wird der erste Schalter beim Erzeugen der rechteckförmigen Wechselspannung noch für eine vorbestimmte dritte Zeitspanne mit der zweiten Frequenz und dem zweiten Tastverhältnis angesteuert

Weitere vorteilhafte Weiterbildungen und Ausgestaltungen der erfindungsgemäßen Schaltungsanordnung und des erfindungsgemäßen Verfahrens zum Starten und Betreiben einer Hochdruckentladungslampe ergeben sich aus weiteren abhängigen Ansprüchen und aus der folgenden Beschreibung.

### Kurze Beschreibung der Zeichnung(en)

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigen:
- Fig.1: ein Prinzipschaltbild der erfindungsgemäßen Schaltungsanordnung,
- Fig. 2: ein Schaltbild der erfindungsgemäßen Schaltungsanordnung mit dargestellter Zündstufe,
- Fig. 3: ein Schaltbild der erfindungsgemäßen Schaltungsanordnung mit dargestellter Zündstufe und dargestelltem Zweipol-Netzwerk,
- Fig. 4: eine Grafik der Lampenspannung, des Lampenstromes und der Spannung am Kondensator C2 der erfindungsgemäßen Schaltungsanordnung bei der Durchführung des erfindungsgemäßen Verfahrens.
- Fig. 5: einen vergrößerten Ausschnitt aus den Signalverläufen der Fig. 4,
- Fig. 6: einen weiteren Ausschnitt der Signalverläufe der Fig. 4 der den Start bis zum elektrischen Durchbruch des Gasentladungslampenbrenners zeigt,
- Fig. 7: einen weiteren Ausschnitt der Signalverläufe der Fig. 4 der den Start der erfindungsgemäßen Schaltungsanordnung und der Hochdruckentladungslampe zeigt,
- Fig. 8: einen etwas anderen Ausschnitt des Zündvorgangs,
- Fig. 9: den Übergang vom Gleichstrombetrieb in den Wechselstrombetrieb,
- Fig. 10: die Situation der Fig. 9 mit einer größeren Zeitbasis von 50ms/Div.

### Bevorzugte Ausführung der Erfindung

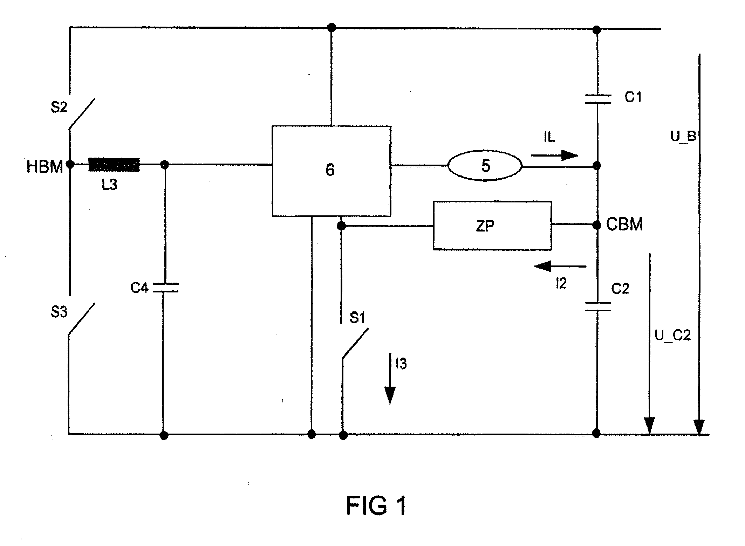

**Fig. 1** zeigt ein Prinzipschaltbild der erfindungsgemäßen Schaltungsanordnung. Die erfindungsgemäße Schaltungsanordnung ist vom Grundprinzip her ein Betriebsgerät für Gasentladungslampen mit eine Halbbrücke mit Leistungsschaltern S2 und S3 und symmetrischer Mittenspannung durch die zwei Koppelkondensatoren C1 und C2. Die Halbbrücke ist an eine Zwischenkreisspannung U_B angeschlossen, die bei Betriebsgeräten mit 220V Wechselspannung üblicherweise ca. 400V beträgt. Die Zwischenkreisspannung liegt zwischen einem Speisespannungspotenzial und einem Bezugspotenzial an. Die Zwischenkreisspannung B_B ist durch die Bauteiletechnologien der Halbleiter auf maximal 500V begrenzt. Bei höheren Spannungen müssten Halbleiter mit anderer Technologie eingesetzt werden, die deutlich teurer wären und das Betriebsgerät unwirtschaftlich machen würden. Zwischen dem Mittenpunkt HBM der Halbbrücke und dem Mittenpunkt CBM der beiden Kondensatoren sind eine Hochdruckentladungslampe 5, ein Zündgerät 6 und eine Drossel L3 in Serienschaltung geschaltet. Zwischen den Mittenpunkt CBM der beiden Kondensatoren und das Zündgerät 6 ist ein Zweipol-Netzwerk ZP geschaltet. Zwischen das Zündgerät 6 und das Bezugspotenzial ist ein erster Schalter S1 geschaltet. Dieser Schalter erfüllt in der erfindungsgemäßen Schaltungsanordnung zwei Funktionen. In seiner ersten Funktion dient der Schalter als Zündschalter für den Primärkreis des Zündgerätes 6. In seiner zweiten Funktion dient der Schalter als Schalter zum Entladen des Koppelkondensators C2.

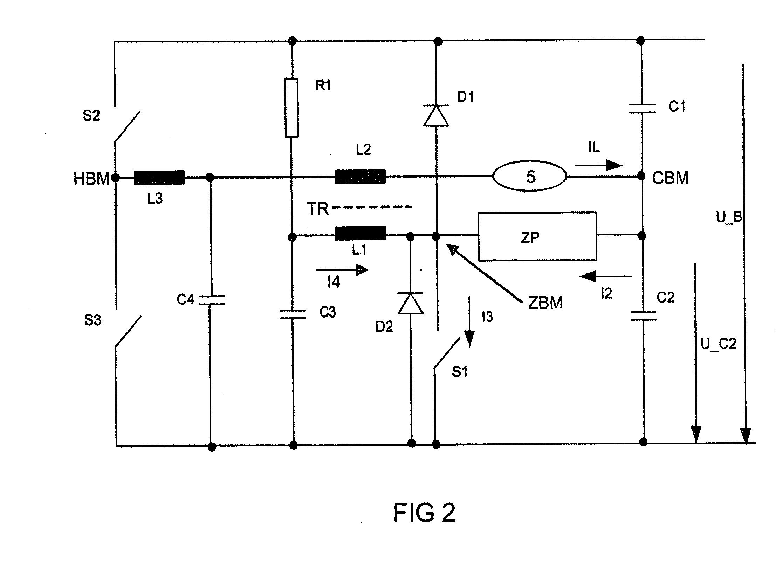

**Fig. 2** zeigt die erfindungsgemäße Schaltungsanordnung mit Details des Zündgerätes 6. Das Zündgerät 6 weist einen Zündtransformator TR mit einer Primärwicklung L1 und einer Sekundärwicklung L2 auf. Die Sekundärwicklung L2 ist in Serie mit der Hochdruckentladungslampe 5 und der Drossel L3 geschaltet. Ein Anschluss der Primärwicklung L1 ist mit einem Ladewiderstand R1 und mit einem Zündkondensator C3 verbunden. Der Ladewiderstand wiederum ist mit dem Speisespannungspotenzial und der Zündkondensator mit dem Bezugspotenzial verbunden. Der andere Anschluss der Primärwicklung ist mit dem Verbindungspunkt ZBM zweier Dioden D1 und D2 verbunden, die in Serie geschaltet sind und an die Zwischenkreisspannung angeschlossen sind. An diesen Verbindungspunkt ZBM ist ebenfalls der erste Schalter S1 sowie das Zweipolnetzwerk ZP angeschlossen. Wie dem Schaltbild zu entnehmen ist, kann mit dem Schalter S1 der Zündkondensator C3 entladen und ein hoher Strom im Primärkreis erzeugt werden. Durch diesen hohen Primärstrom wird eine Zündspannung an der Sekundärwicklung L2 generiert und der Hochdruckentladungslampe 5 zugeführt.

Über das Zweipolnetzwerk ZP ist der erste Schalter S1 auch zum Koppelkondensator C2 parallel geschaltet.

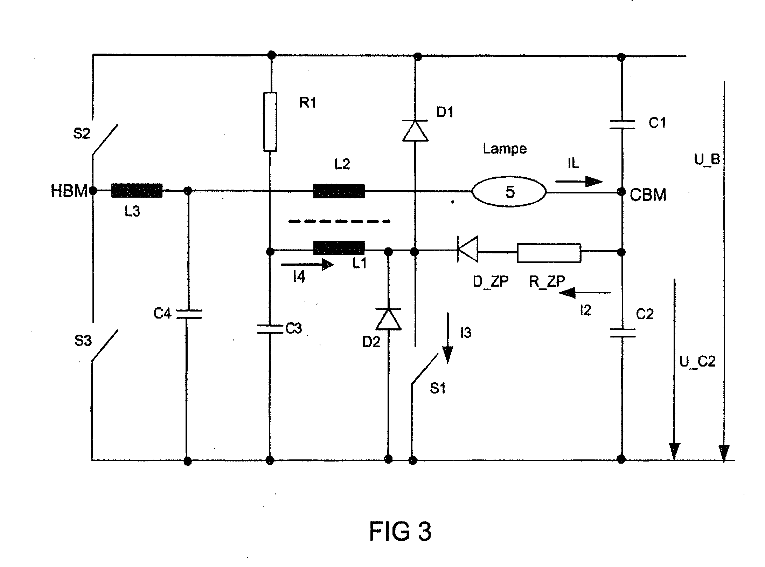

**Fig. 3** zeigt nun die erfindungsgemäße Schaltungsanordnung mit einer beispielhaften Ausbildung des Zweipolnetzwerks ZP, welches hier aus der Serienschaltung einer Diode D_ZP und eines Widerstandes R_ZP besteht. Dabei ist die Kathode der Diode mit dem ersten Schalter S1 verbunden. Wird der erste Schalter S1 geschlossen, so fließt ein Strom 13 durch den ersten Schalter S1, der sich aus einem Strom I2 aus dem Koppelkondensator C2 und einem Strom 14 aus dem Zündkondensator C3 zusammensetzt. Das Zweipolnetzwerk ZP begrenzt dabei den Entladestrom I2 aus dem Koppelkondensator C2. Dabei begrenzt der Widerstand R_ZP des Zweipolnetzwerkes den Strom bei geschlossenem ersten Schalter S1 und die Diode D_ZP des Zweipolnetzwerkes legt die Stromrichtung fest, so dass der Kondensator C2 nur durch das Zweipolnetzwerk entladen werden kann, und bei offenem ersten Schalter kein Strom in den Koppelkondensator fließen kann. Der Widerstand R_ZP ist so dimensioniert, dass der Anteil des Spitzenwertes des Stromes I2 durch das Zweipolnetzwerk am Spitzenwert des Gesamtstromes I3 kleiner als 40% ist. Besonders bevorzugt ist der Anteil des Spitzenwertes des Stroms I2 durch das Zweipolnetzwerk am Spitzenwert des Gesamtstromes I3 kleiner als 20%. Der Widerstand R_ZP muss dabei so dimensioniert sein, dass er die Leistung für die Zeit, in der ein Strom durch ihn fließt aufnehmen kann. Die aufzunehmende Arbeit beträgt daher I2*U_C2_DC*(t₄-t₂). Bei der vorliegenden Ausführungsform wurde das Zweipolnetzwerk folgendemaßen dimensioniert:

| | |
|---|---|
| R_ZP: | 27R, 2W |
| D_ZP: | 600V, 1A |

Der Schalter kann damit erfindungsgemäß gleichzeitig als Zündschalter und zum Entladen des Koppelkondensators C2 Verwendung finden. Damit ist nur ein Schalter mit zugehöriger Ansteuerung notwendig, was Kosten und Bauraum spart. Beim erfindungsgemäßen Verfahren, welches mit dieser Schaltungsanordnung ausgeführt werden kann wird nun der erste Schalter S1 während mehrerer aufeinanderfolgender Zeitspannen mit verschiedenen Frequenzen und Tastverhältnissen angesteuert.

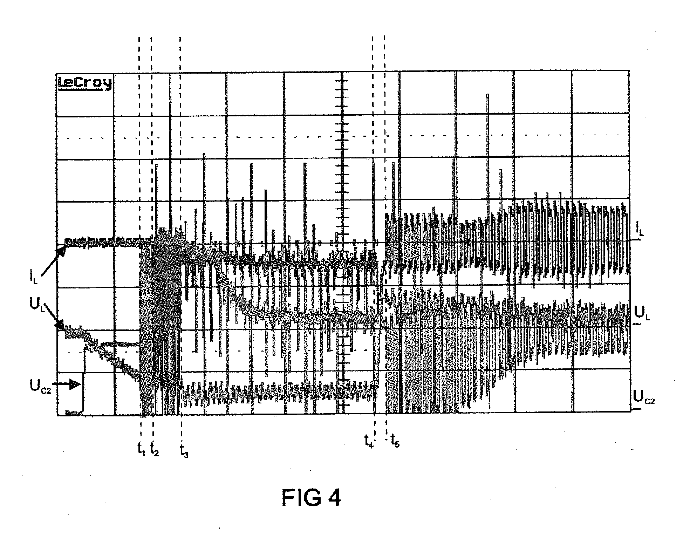

**Fig. 4** zeigt einige relevante Größen, die das komplette Startverfahren veranschaulichen. Die Zeitauflösung ist hier mit 100ms/Div so gewählt, dass der gesamte Startvorgang gezeigt werden kann. Zum Zeitpunkt t₁ beträgt die Spannung am Koppelkondensator C2 die halbe Zwischenkreisspannung, in etwa 210V. Ab dem Zeitpunkt t₂ werden Zündpulse erzeugt was sich einerseits im Lampenspannungssignal, im Lampenstromsignal und in der Spannung U_C2 am Koppelkondensator C2 widerspiegelt, die von ca. 210 V auf 50V bis 60V sinkt, um die Übernahmespannung von 210V auf 420V-50V=370V zu erhöhen. In dieser Zeit wird der erste Schalter mit einer ersten Frequenz von etwa 3kHz und einem ersten Tastverhältnis bei einer Einschaltdauer von 50us bis 100us angesteuert. Zum Zeitpunkt t₃ zündet die Hochdruckentladungslampe 5, und es beginnt die Gleichspannungsphase, die bis zum Zeitpunkt t₅ dauert, und in der eine Elektrode des Gasentladungslampenbrenners aufgeheizt wird. In einer Ausführungsform ist der Zeitpunkt t5 abhängig vom Zeitpunkt der Zündung der Hochdruckentladungslampe 5, um eine definierte Länge der Gleichspannungsphase zu erreichen. Die Gleichspannungsphase ist dabei zwischen 0,1s und 1s, bevorzugt zwischen 0,2s und 0,6s lang. In der Phase zwischen dem Zeitpunkt t₄ und dem Zeitpunkt t₅ wird der erste Schalter mit einer zweiten Frequenz von 50Hz bis 5kHz und einem zweiten Tastverhältnis bei einer Einschaltdauer von 4us angesteuert, um den Koppelkondensator C2 für die erste Kommutierung auf eine Spannung U_C2_KM von ca. 280V aufzuladen. Je nach Ausführungsform kann die Spannung zwischen 250V und 500V liegen. Zum Zeitpunkt t₅ wird auf Wechselstrombetrieb umgeschaltet, und nach einer Einschwingphase, in der auch die zweite Elektrode des Gasentladungslampenbrenners aufgeheizt wird befindet sich die Lampe im stabilen Betrieb. Die Umschaltung auf Wechselstrom erfolgt in zwei Stufen: In der ersten Stufe, die zum Zeitpunkt t₄ beginnt, wird der erste Schalter mit einem zweiten Tastverhältnis und einer zweiten Frequenz von 50Hz bis 5kHz angesteuert, wobei die Einschaltdauer des ersten Schalters gegenüber dem ersten Tastverhältnis deutlich kürzer ist, in diesem Ausführungsbeispiel 4us. Dies hat zur Folge, dass der Koppelkondensator C2 langsam wieder aufgeladen wird, und die Spannung U_C2 demzufolge ansteigt. Zum Zeitpunkt t₅ hat die Spannung U_C2 am Koppelkondensator C2 ein Maximum erreicht, so dass die Übernahmespannung bei der ersten Kommutierung wieder entsprechend hoch ist, und es wird wie oben schon erläutert auf Wechselstrombetrieb umgestellt. Für eine weitere Zeitspanne wird während des Wechselstrombetriebes der erste Schalter S1 mit dem zweiten Tastverhältnis und der Einschaltdauer von 4us, und der zweiten Frequenz von 50Hz bis 5kHz angesteuert, um weiter Zündpulse zu erzeugen. Dies stellt sicher, dass bei einem unvorhergesehenen Erlöschen der Hochdruckentladungslampe nach einer Kommutierung diese sofort wieder gezündet wird. Da die zweite Elektrode am Anfang des Wechselstrombetriebes noch recht kalt ist, ist ein Verlöschen des Entladungsbogens nach der Kommutierung nicht immer zu vermeiden.

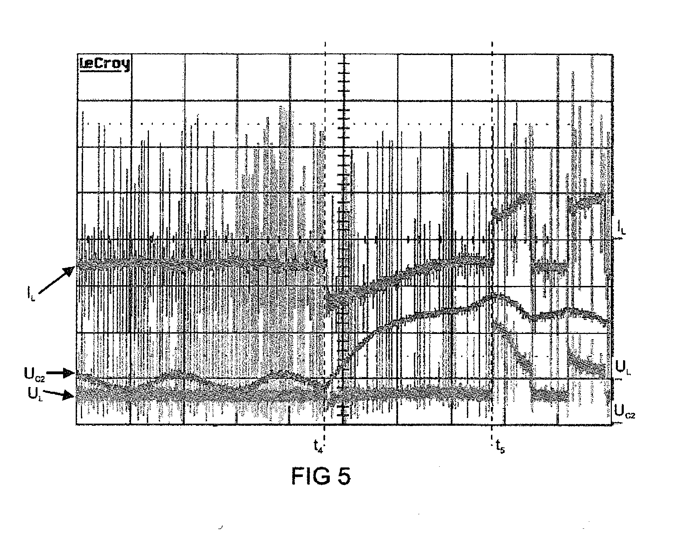

**Fig. 5** zeigt einen vergrößerten Ausschnitt aus den Signalverläufen der **Fig. 4****.** Die Zeitbasis ist hier auf 5ms/Div eingestellt. Bis zum Zeitpunkt t₄ ist die Spannung U_{C2} am Koppelkondensator C2 niedrig, da das Tastverhältnis so eingestellt ist, dass die Einschaltdauer des ersten Schalters S1 sehr hoch ist. Zum Zeitpunkt t₄ wird das Tastverhältnis umgestellt und die Einschaltdauer ist nun bedeutend niedriger als vorher. Das hat zur Folge, dass der Koppelkondensator C2 wesentlich weniger stark entladen wird, und die Spannung U_C2 an ihm somit wieder ansteigt. In Folge des Umschwingens steigt die Spannung U_C2 am Koppelkondensator C2 auf eine Spannung U_C2_KM an, die höher ist als die Zwischenkreisspannung U_B. Zum Zeitpunkt t₅ ist die Spannung am Koppelkondensator C2 am höchsten, und die Halbbrücke wird in Betrieb genommen. Damit steht nach dem Umschalten der Halbbrücke eine höhere Übernahmespannung als die Zwischenkreisspannung für die Hochdruckentladungslampe 5 zur Verfügung. Ab diesem Zeitpunkt wird die Lampe mit einem Wechselstrom betrieben.

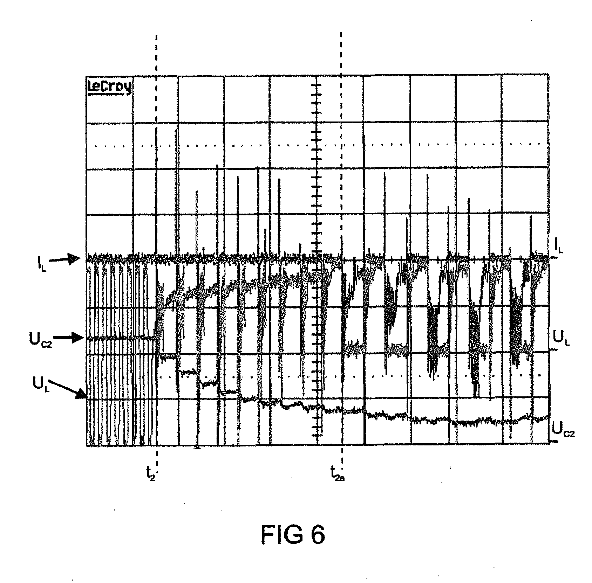

**Fig. 6** zeigt einen weiteren Ausschnitt der Signalverläufe der **Fig. 4****.** Hier wird der Start bis zum elektrischen Durchbruch des Gasentladungslampenbrenners sichtbar. Die Zeitbasis ist hier 1ms/Div. Vor dem Zeitpunkt t₂ werden noch keine Zündpulse erzeugt, hier läuft die Halbbrücke leer mit einer vorbestimmten Frequenz, was an der rechteckförmigen Lampenspannung UL gesehen werden kann. Zum Zeitpunkt t₂ wird der erste Schalter S1 mit der ersten Frequenz und dem ersten Tastverhältnis betrieben. Die Einschaltdauer des ersten Schalters ist recht hoch, daher entlädt sich der Koppelkondensator C2 bei jedem Einschalten sichtbar. Durch das Einschalten des ersten Schalters werden Zündpulse erzeugt, die an den Gasentladungslampenbrenner angelegt werden. Zum Zeitpunkt t₂ₐ beginnt der Gasentladungslampenbrenner durchzubrechen, was an dem pulsförmigen Stromverlauf gesehen werden kann. Zum Zeitpunkt des ersten elektrischen Durchbruchs im Gasentladungslampenbrenner ist die Spannung U_C2 am Koppelkondensator C2 schon signifikant erniedrigt, und die Übernahmespannung für die Hochdruckentladungslampe 5 beziehungsweise den Gasentladungslampenbrenner der Hochdruckentladungslampe 5 entsprechend erhöht.

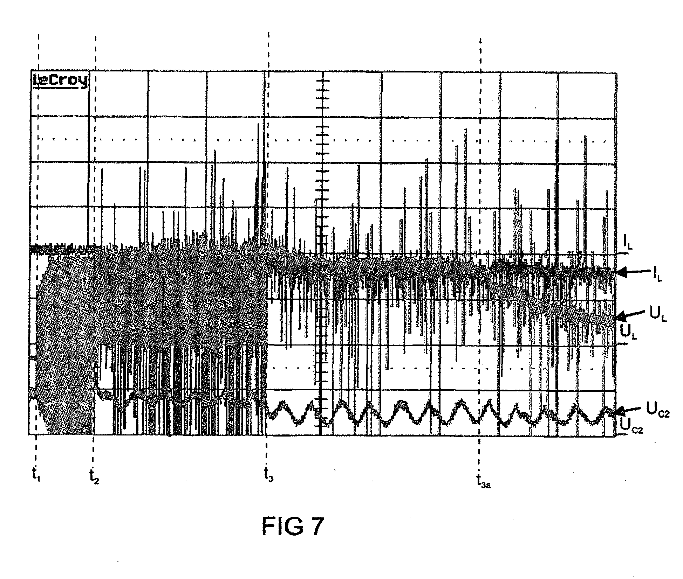

**Fig. 7** zeigt einen weiteren Ausschnitt der Signalverläufe der **Fig. 4****.** Es wird der Start der erfindungsgemäßen Schaltungsanordnung und der Hochdruckentladungslampe 5 gezeigt. Die Zeitpunkte entsprechen wieder den Zeitpunkten der **Fig. 4****.** Die Zeitbasis in dieser Figur ist 20ms/Div. Zu Beginn zum Zeitpunkt t₁ wird die Halbbrücke wie oben schon erwähnt mit einer vorbestimmten Frequenz, was an der rechteckförmigen Lampenspannung UL gesehen werden kann, betrieben. Zu diesem Zeitpunkt beginnt auch die vorgeschaltete Leistungsfaktorkorrekturschaltung ihre Arbeit und erhöht die Zwischenkreisspannung, was sich ebenfalls in der Spannung U_C2 am Koppelkondensator C2 niederschlägt. Ab dem Zeitpunkt t₂ werden Zündpulse erzeugt. Dies ist gut an dem sehr unruhigen Stromverlauf des Lampenstromes IL zu sehen. Ab dem Zeitpunkt t₃ etabliert sich eine Glimmentladung im Gasentladungslampenbrenner, die ab dem Zeitpunkt t₃ₐ langsam in eine Bogenentladung überführt wird. Dies zeigt sich in einem langsamen absinken der Lampenspannung UL. Der Lampenstrom IL erhöht sich leicht und verläuft wesentlich stabiler.

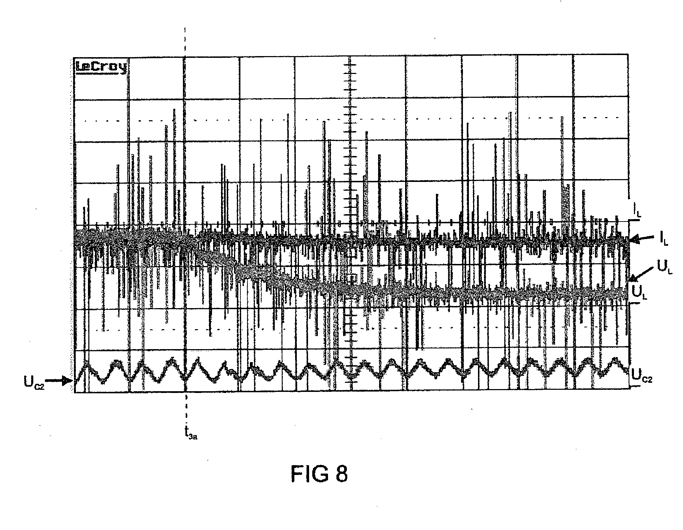

**Fig. 8** zeigt einen etwas anderen Ausschnitt des Zündvorgangs mit ebenfalls 20ms/Div Zeitauflösung. Hier wird die Überführung der Glimmentladung in eine Bogenentladung gezeigt. Zum Zeitpunkt t₃ₐ geht die Glimmentladung langsam in eine Bogenentladung über, die sich nach und nach stabilisiert. Ab einer gewissen Zeit sinkt die Lampenspannung UL nicht mehr, und der Bogen hat sich damit soweit stabilisiert, dass begonnen werden kann den Gasentladungslampenbrenner in den stabilen Brennzustand bei Nominalleistung zu überführen. Dies erfolgt durch weiteren Betrieb mit Gleichstrom, bei dem eine Elektrode des Gasentladungslampenbrenners aufgeheizt wird.

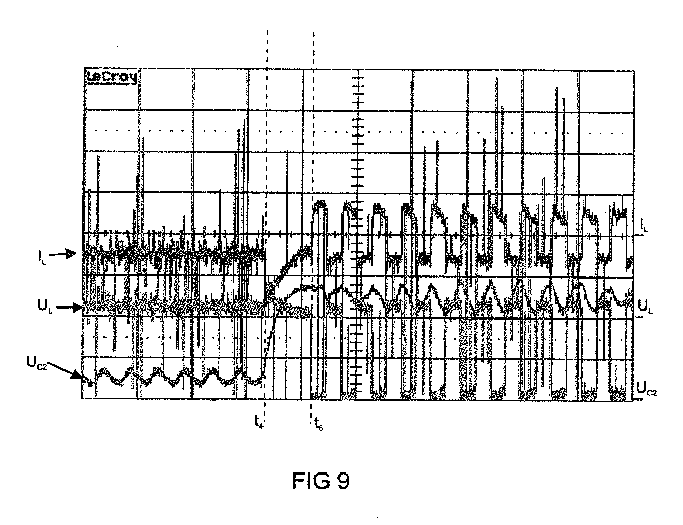

**Fig. 9** zeigt den Übergang vom Gleichstrombetrieb in den Wechselstrombetrieb. Die Zeitbasis beträgt hier wie vorher 20ms/Div. Bis zum Zeitpunkt t₄ ist die Hochdruckentladungslampe im Gleichstrombetrieb, zu diesem Zeitpunkt wechselt die Ansteuerung des ersten Schalters S1, der nun mit deutlich verringerter Einschaltdauer betrieben wird. Dadurch wird der Koppelkondensator C2 wieder aufgeladen und seine Spannung U_C2 steigt auf die Hälfte der Zwischenkreisspannung. Ist dies geschehen, wird zum Zeitpunkt t₅ die erste Kommutierung eingeleitet, in dem die Halbbrücke umschaltet, und sich die Lampenspannung und die Richtung des Lampenstroms somit umkehren. In diesem Betriebsmodus wird dann auch die zweite Elektrode aufgeheizt.

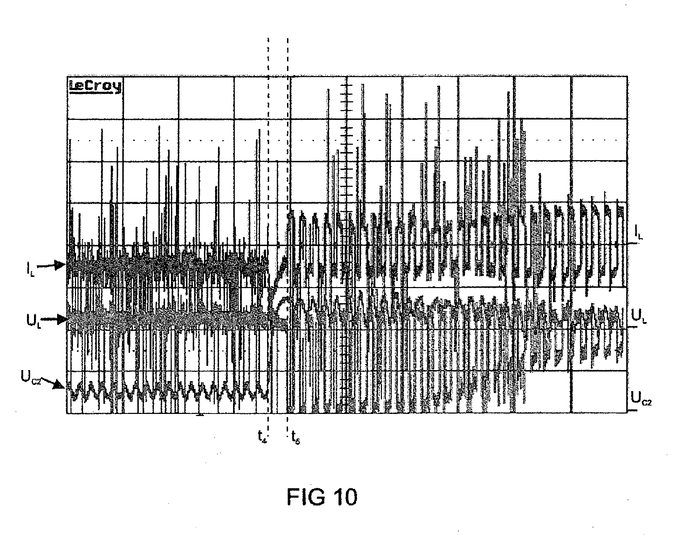

**Fig. 10** zeigt die Situation mit einer größeren Zeitbasis von 50ms/Div. Es ist deutlich zu sehen, dass hier die zweite Elektrode noch zu kalt ist, so dass hier noch eine Glimmentladung stattfindet, was an der erhöhten Lampenspannung in dieser Stromrichtung gesehen werden kann. Die Lampe läuft eine Zeit lang unsymmetrisch, bis sich die zweite Elektrode soweit aufgeheizt hat, dass die Glimmentladung in dieser Stromrichtung ebenfalls in eine Bogenentladung führt, und die Lampenspannung dementsprechend sinkt.

## Patentansprüche

1. Schaltungsanordnung zum Starten und Betreiben einer Hochdruckentladungslampe, **aufweisend:**
- eine Halbbrückenanordnung mit einem Halbbrückenmittelpunkt (HBM), die an eine Zwischenkreisspannung (U_B) mit einem Bezugspotenzial und einem Speisespannungspotenzial angeschlossen ist,
- eine Lampendrossel (L3), die mit einem Ende an den Halbbrückenmittelpunkt angeschlossen ist,
- eine Zündstufe (6), die mit dem anderen Ende der Lampendrossel, der Hochdruckentladungslampe, sowie mit der Zwischenkreisspannung verbunden ist und einen Verbindungspunkt (ZBM) aufweist,
- einen ersten Schalter (S1), der zwischen das Bezugspotential der Zwischenkreisspannung (U B) und dem Verbindungspunkt (ZBM) geschaltet ist,
- eine Serienschaltung eines ersten (C1) und eines zweiten (C2) Kondensators, die an die Zwischenkreisspannung angeschlossen ist,
- Anschlüsse zum Anschließen der Hochdruckentladungslampe (5), wobei ein erster Anschluss mit der Zündstufe verbunden ist und ein zweiter Anschluss mit dem Verbindungspunkt (CBM) des ersten (C1) und zweiten (C2) Kondensators,
- ein Zweipol-Netzwerk (ZP), dessen erster Pol mit dem Verbindungspunkt (ZBM) verbunden ist und dessen zweiter Pol mit dem Verbindungspunkt (CBM) des ersten (C1) und zweiten (C2) Kondensators verbunden ist, wobei
- der erste Schalter (S1) ansteuerbar ist, um Zündpulse zum Zünden der an die Schaltungsanordnung angeschlossenen Hochdruckentladungslampe (5) zu er zeugen, und um den zweiten Kondensator (C2) über das Zweipolnetzwerk (ZP) zu entladen.

2. Schaltungsanordnung nach Anspruch1, **dadurch gekennzeichnet, dass** das Zweipolnetzwerk (ZP) eine Serienschaltung aus einem Widerstand (R_ZP) und einer Diode (D_ZP) ist.

3. Schaltungsanordnung nach Anspruch 2, **dadurch gekennzeichnet, dass** der Widerstand so dimensioniert ist, dass der Spitzenwert des Stromes (I2) durch das Zweipolnetzwerk (ZP) maximal 40 % des Spitzenwertes des Stromes (I3) durch den ersten Schalter (S1) beträgt.

4. Schaltungsanordnung nach Anspruch 1, **dadurch gekennzeichnet, dass** sie ausgelegt ist den zweiten Kondensator bis auf eine vorbestimmte Spannung (U_C2_DC) zu entladen.

5. Schaltungsanordnung nach Anspruch 4 **dadurch gekennzeichnet, dass** die vorbestimmte Spannung (U_C2_DC) zwischen 10 V und 200 V, insbesondere zwischen 20 V und 150 V liegt.

6. Schaltungsanordnung nach einem der Ansprüche 1 bis 5, **dadurch gekennzeichnet, dass** sie ausgelegt ist den ersten Schalter (S1) zum Entladen des zweiten Kondensators für eine vorbestimmte Zeit getaktet anzusteuern.

7. Schaltungsanordnung nach Anspruch 6, **dadurch gekennzeichnet, dass** sie ausgelegt ist den ersten Schalter (S1) mit einer Pulsweitenmodulation anzusteuern.

8. Verfahren zum Starten und Betreiben einer Hochdruckentladungslampe (5) mit einer Schaltungsanordnung nach einem der Ansprüche 1 bis 7, **gekennzeichnet durch folgende zeitlich hintereinander ablaufende Schritte:**
- Erzeugen einer Zündspannung und Entladen des zweiten Kondensators (C2) auf eine vorbestimmte erste Spannung (U_C2_DC) **durch** getaktetes Ansteuern des ersten Schalters (S1) mit einer ersten Frequenz und einem ersten Tastverhältnis für eine erste Zeitspanne (t₂-t₄),
- Erzeugen einer Zündspannung und Aufladen des zweiten Kondensators (C2) auf eine vorbestimmte zweite Spannung (U_C2_KM) **durch** getaktetes Ansteuern des ersten Schalters (S1) mit einer zweiten Frequenz und einem zweiten Tastverhältnis für eine zweite Zeitspanne (t₄-t₅),
- erzeugen einer rechteckförmigen Wechselspannung zum Betreiben der Hochdruckentladungslampe (5),
- permanentes Öffnen des ersten Schalters.

9. Verfahren nach Anspruch 8, **dadurch gekennzeichnet, dass** ein elektrischer Durchbruch in der Lampe detektiert wird und die Länge der ersten Zeitspanne abhängig von der Detektion des elektrischen Durchbruchs ist.

10. Verfahren nach Anspruch 9, **dadurch gekennzeichnet, dass** die erste Zeitspanne ab der Detektion des elektrischen Durchbruchs noch eine vorbestimmte Zeit lang andauert.

11. Verfahren nach Anspruch 10, **dadurch gekennzeichnet, dass** die vorbestimmte Zeitdauer ab der Detektion des elektrischen Durchbruchs 0,1 s bis 1 s beträgt.

12. Verfahren nach Anspruch 11, **dadurch gekennzeichnet, dass** die vorbestimmte Zeitdauer ab der Detektion des elektrischen Durchbruchs 0,2 s bis 0,6 s beträgt.

13. Verfahren nach Anspruch 8, **dadurch gekennzeichnet, dass** der erste Schalter beim Erzeugen der rechteckförmigen Wechselspannung noch für eine vorbestimmte dritte Zeitspanne mit der zweiten Frequenz und dem zweiten Tastverhältnis angesteuert wird.

14. Verfahren nach Anspruch 13, **dadurch gekennzeichnet, dass** die dritte Zeitspanne 0,1 s bis 1 s lang ist.

15. Verfahren nach Anspruch 14, **dadurch gekennzeichnet, dass** die dritte Zeitspanne 0,2 s bis 0,6 s lang ist.

## Claims

1. Circuit arrangement for starting and operating a high-pressure discharge lamp, comprising:
- a half-bridge arrangement comprising a half-bridge centre point (HBM), which is connected to a DC link voltage (U_B) with a reference potential and a feed voltage potential,
- a lamp inductor (L3), which is connected at one end to the half-bridge centre point,
- a striking stage (6), which is connected to the other end of the lamp inductor of the high-pressure discharge lamp, and to the DC link voltage and has a node (ZBM),
- a first switch (S1), which is connected between the reference potential of the DC link voltage (U_B) and the node (ZBM),
- a series circuit comprising a first capacitor (C1) and a second capacitor (C2), which series circuit is connected to the DC link voltage,
- connections for connecting the high-pressure discharge lamp (5), wherein a first connection is connected to the striking stage and a second connection is connected to the node (CBM) between the first capacitor (C1) and the second capacitor (C2),
- a two-pole network (ZP), whose first pole is connected to the node (ZBM) and whose second pole is connected to the node (CBM) between the first capacitor (C1) and the second capacitor (C2), wherein
- the first switch (S1) is drivable for generating striking pulses for striking the high-pressure discharge lamp (5) connected to the circuit arrangement and for discharging the second capacitor (C2) via the two-pole network (ZP).

2. Circuit arrangement according to Claim 1, **characterized in that** the two-pole network (ZP) is a series circuit comprising a resistor (R_ZP) and a diode (D_ZP).

3. Circuit arrangement according to Claim 2, **characterized in that** the resistor has such a resistance value that the peak value of the current (I2) through the two-pole network (ZP) is at most 40% of the peak value of the current (I3) through the first switch (S1).

4. Circuit arrangement according to Claim 1, **characterized in that** said circuit arrangement is designed to discharge the second capacitor down to a predetermined voltage (U_C2_DC).

5. Circuit arrangement according to Claim 4, **characterized in that** the predetermined voltage (U_C2_DC) is between 10 V and 200 V, in particular between 20 V and 150 V.

6. Circuit arrangement according to one of Claims 1 to 5, **characterized in that** said circuit arrangement is designed to actuate, in clocked fashion, the first switch (S1) for discharging the second capacitor for a predetermined time.

7. Circuit arrangement according to Claim 6, **characterized in that** said circuit arrangement is designed to actuate the first switch (S1) using pulse width modulation.

8. Method for starting and operating a high-pressure discharge lamp (5) using a circuit arrangement according to one of Claims 1 to 7, **characterized by** the following temporally successive steps:
- generating a striking voltage and discharging the second capacitor (C2) to a predetermined first voltage (U_C2_DC) by clocked actuation of the first switch (S1) at a first frequency and a first duty factor for a first time span (t₂-t₄),
- generating a striking voltage and charging the second capacitor (C2) to a predetermined second voltage (U_C2_KM) by clocked actuation of the first switch (S1) at a second frequency and a second duty factor for a second time span (t₄-t₅),
- generating a square-wave AC voltage for operating the high-pressure discharge lamp (5),
- permanently opening the first switch.

9. Method according to Claim 8, **characterized in that** an electrical breakdown in the lamp is detected, and the length of the first time span is dependent on the detection of the electrical breakdown.

10. Method according to Claim 9, **characterized in that** the first time span still lasts for a predetermined time after detection of the electrical breakdown.

11. Method according to Claim 10, **characterized in that** the predetermined time duration after detection of the electrical breakdown is 0.1 s to 1 s.

12. Method according to Claim 11, **characterized in that** the predetermined time duration after detection of the electrical breakdown is 0.2 s to 0.6 s.

13. Method according to Claim 8, **characterized in that** the first switch is still actuated for a predetermined third time span at the second frequency and the second duty factor during generation of the square-wave AC voltage.

14. Method according to Claim 13, **characterized in that** the third time span is 0.1 s to 1 s long.

15. Method according to Claim 14, **characterized in that** the third time span is 0.2 s to 0.6 s long.

## Revendications

1. Montage pour mettre en marche et faire fonctionner une lampe à décharge à haute pression, comportant :
- un montage en demi-pont avec un point central de demi-pont (HBM), lequel montage est raccordé à une tension de circuit intermédiaire (U_B) avec un potentiel de référence et un potentiel de tension d'alimentation ;
- une inductance de lampe (L3) qui est raccordée en une extrémité au point central de demi-pont ;
- un étage d'allumage (6) qui est connecté à l'autre extrémité de l'inductance de lampe de la lampe à décharge à haute pression et à la tension de circuit intermédiaire et qui présente un point de connexion (ZBM) ;
- un premier commutateur (S1) qui est monté entre le potentiel de référence de la tension de circuit intermédiaire (U_B) et le point de connexion (ZBM) ;
- un montage en série composé d'un premier (C1) et d'un deuxième condensateur (C2), lequel montage est raccordé à la tension de circuit intermédiaire ;
- des raccordements servant à raccorder la lampe à décharge à haute pression (5), un premier raccordement étant connecté à l'étage d'allumage et un deuxième raccordement, au point de connexion (CBM) du premier (C1) et du deuxième condensateur (C2) ;
- un réseau bipolaire (ZP) dont le premier pôle est connecté au point de connexion (ZBM) et dont le deuxième pôle est connecté au point de connexion (CBM) du premier (C1) et du deuxième condensateur (C2),
- le premier commutateur (S1) pouvant être commandé pour produire des impulsions d'allumage pour l'allumage de la lampe à décharge à haute pression (5) raccordée au montage et pour décharger le deuxième condensateur (C2) par l'intermédiaire du réseau bipolaire (ZP).

2. Montage selon la revendication 1, **caractérisé en ce que** le réseau bipolaire (ZP) est un montage en série composé d'une résistance (R_ZP) et d'une diode (D_ZP).

3. Montage selon la revendication 2, **caractérisé en ce que** la résistance est dimensionnée de manière telle que la valeur de pointe du courant (I2) qui passe par le réseau bipolaire (ZP) représente au maximum 40 % de la valeur de pointe du courant (I3) qui passe par le premier commutateur (S1).

4. Montage selon la revendication 1, **caractérisé en ce qu'**il est conçu pour décharger le deuxième condensateur jusqu'à une tension prédéfinie (U_C2_DC).

5. Montage selon la revendication 4, **caractérisé en ce que** la tension prédéfinie (U_C2_DC) est située entre 10 V et 200 V, et plus particulièrement entre 20 V et 150 V.

6. Montage selon l'une des revendications 1 à 5, **caractérisé en ce qu'**il est conçu pour commander le premier commutateur (S1) de manière cadencée pendant un temps prédéfini pour décharger le deuxième condensateur.

7. Montage selon la revendication 6, **caractérisé en ce qu'**il est conçu pour commander le premier commutateur (S1) avec une modulation de largeur d'impulsion.

8. Procédé pour mettre en marche et faire fonctionner une lampe à décharge à haute pression (5) comportant un montage selon l'une des revendications 1 à 7, **caractérisé par** les étapes suivantes qui se succèdent dans le temps :
- production d'une tension d'allumage et déchargement du deuxième condensateur (C2) jusqu'à une première tension prédéfinie (U_C2_DC) par commande cadencée du premier commutateur (S1) avec une première fréquence et un premier rapport cyclique pour un premier laps de temps (t₂-t₄) ;
- production d'une tension d'allumage et chargement du deuxième condensateur (C2) jusqu'à une deuxième tension prédéfinie (U_C2_KM) par commande cadencée du premier commutateur (S1) avec une deuxième fréquence et un deuxième rapport cyclique pour un deuxième laps de temps (t₄-t₅) ;
- production d'une tension alternative rectangulaire pour faire fonctionner la lampe à décharge à haute pression (5) ;
- ouverture permanente du premier commutateur.

9. Procédé selon la revendication 8, **caractérisé en ce qu'**un claquage électrique de la lampe est détecté et **en ce que** la longueur du premier laps de temps dépend de la détection du claquage électrique.

10. Procédé selon la revendication 9, **caractérisé en ce que** le premier laps de temps dure encore un temps prédéfini à partir de la détection du claquage électrique.

11. Procédé selon la revendication 10, **caractérisé en ce que** la durée de temps prédéfinie à partir de la détection du claquage électrique est de 0,1 s à 1 s.

12. Procédé selon la revendication 11, **caractérisé en ce que** la durée de temps prédéfinie à partir de la détection du claquage électrique est de 0,2 s à 0,6 s.

13. Procédé selon la revendication 8, **caractérisé en ce que** le premier commutateur, lors de la production de la tension alternative rectangulaire, est encore commandé pendant un troisième laps de temps prédéfini avec la deuxième fréquence et le deuxième rapport cyclique.

14. Procédé selon la revendication 13, **caractérisé en ce que** le troisième laps de temps dure 0,1 s à 1 s.

15. Procédé selon la revendication 13, **caractérisé en ce que** le troisième laps de temps dure 0,2 s à 0,6 s.
